# EUROPEAN PATENT APPLICATION

(11) **EP 3 312 967 A1**
(43) Date of publication of application: **25.04.2018**
(21) Application number: 16195220.5
(22) Date of filing: 24.10.2016
(51) Int. Cl.: H02J 7/00

(54) **DISCHARGE DEVICE, SAFETY APPARATUS, BATTERY UNIT AND METHOD FOR DISCHARGING AN ELECTRIC ENERGY STORE ELEMENT**

(71) Applicant: Lithium Energy and Power GmbH & Co. KG, 70469 Stuttgart (DE)
(72) Inventor: Wille, Christopher, 70563 Stuttgart (DE); Friedrich, Marco, 71638 Ludwigsburg (DE); Hasenkopf, Dirk, 70190 Stuttgart (DE); Liebenow, Cornelius, 70372 Stuttgart (DE)
(74) Representative: Bee, Joachim

(57) **Abstract**

The present invention relates to a discharge device (10) to discharge an electric energy store element (12), especially a battery element, the discharge device (10) including two connections (24, 26) for connecting the electric energy store element (12) and a circuit arrangement (18), which arrangement (18) comprises a current path (20), which current path (20) connects the two connections (24, 26), comprises a switch element (28) and has a well-defined electrical resistance R1 when connected through, wherein the circuit arrangement (18) further comprises at least one further current path (22), which further current path (22) also connects the two connections (24, 26), comprises a switch element (28) and has a well-defined electrical resistance R2 when connected through, wherein the resistances R1, R2 of the different current paths (20, 22) differ from one to another.

The present invention further relates to a corresponding safety apparatus, battery unit and method for discharging an electric energy store element (12).

## Description

The present invention relates to a discharge device for discharging an electric energy store element, especially a battery element, the discharge device including two connections for connecting the electric energy store element and a circuit arrangement, which arrangement comprises a current path, which current path connects the two connections, comprises a switch element and has a well-defined electrical resistance when connected through. The present invention further relates to a corresponding security device and a corresponding method for discharging an electric energy store element.

### State of the art

Battery elements for electrochemical storage frequently contain aggressive substances which, when set free, may lead to the endangerment of persons and objects. In some energy store elements, for instance lithium ion ("Li ion") battery elements, there is the additional danger of fire and/or explosion, since the electrolyte used is combustible. As a result, known batteries and capacitors are constructed in such a way that they are able to withstand the mechanical stresses that are to be expected, without a jacket of the battery being injured, so that transition of the dangerous substances into the surroundings of the energy store is prevented.

In spite of this, damage to the jacket is never quite to be excluded. In the field of motor vehicles, for example, in which a battery may be used for supplying the vehicle electrical system or for driving something, in case of an accident, even a well secured battery may be greatly deformed and may burst open. The ignition of the exiting electrolyte may take place during the deformation or later, quite possibly even after several seconds or minutes.

WO 2012/013616 A1 describes a safety apparatus for an electric energy store element, the device comprising: a discharge device to discharge an electric energy store element in response to a deformation of a housing of an energy store element that is impending or that has (already) occurred. The discharge device comprises a current path with a switch element and a resistor. As a function of a deformation speed and a maximum capacity of the electric energy store element, as well as perhaps a pre-warning time up to the probable deformation of the electric energy store element, one may thus succeed in reducing the state of charge of the store element in time by a decisive proportion so that a fire and/or an explosion by exiting electrolyte are able to be avoided. However, the discharge has to be performed in a well-defined manner.

Document US 2013/0323546 A1 shows a secondary battery including two electrode assemblies, a case accommodating the two electrode assemblies, a terminal part electrically connected to the two electrode assemblies, and exposed to an outside of the case, and a plurality of short circuit inducing members between the first electrode assembly and the case, between the second electrode assembly and the case, and between the first electrode assembly and the second electrode assembly.

### Disclosure of the invention

The discharge device for discharging an electric energy store element with the features of claim 1 has the advantage that the discharge can be performed quickly but with low risk of a thermal overload.

The discharge device according to the invention includes two connections for connecting the electric energy store element and a circuit arrangement, which arrangement comprises (i) a current path, which current path connects the two connections, comprises a switch element and has a well-defined electrical resistance R1 when connected through, and (ii) at least one further current path, which further current path also connects the two connections, comprises a switch element and has a well-defined electrical resistance R2, R3, ... when connected through. Preferably the resistances R1, R2, R3, ... of the different current paths differ from one to another.

According to an embodiment of the invention, the resistance R1, R2 of the current paths are adapted to different phases P1, P2 of a characteristic function f of the current flow versus the time of the electric energy store element (f(t) = I) under constant load of low resistivity (abbreviated: under low load). This load of low resistivity corresponds to a resistance equal to or lower than the lowest resistance of the current paths within the circuit arrangement.

According to another embodiment of the invention, the discharge device further comprises at least one control device for controlling the switch elements. Preferably, the control device is arranged for controlling the current flow depending on the characteristic function f of the electric energy store element by use of the switch elements.

According to a further embodiment of the invention, the control device interposes the different current paths between the two connection points for at least two phases P1, P2 of the characteristic function f.

According to yet another embodiment of the invention, the one of the switch elements has a higher switching speed and/or a higher current-carrying capacity than the other switch element or at least one of the other switch elements.

The present invention further relates to a safety apparatus, comprising a discharge device to discharge an electric energy store element in response to a deformation of an energy store element, that is impending or that has occurred, wherein the discharge device is an aforementioned discharge device.

The safety apparatus preferably further comprises a determination device to determine the deformation of the energy store element that one of is: impending or has occurred, wherein the discharge device discharges the energy store element as a function of a determination result by the determination device. The determination device can be configured to determine a deformation speed of the energy store element, and the discharge device is equipped to discharge the energy store element as a function of the determined deformation speed. Alternatively, the determination device can be configured to determine a degree of deformation of the energy store, and the discharge device is equipped to discharge the energy store as a function of the determined degree of deformation.

The present invention further relates to an electric energy store unit comprising an electric energy store element, especially a battery element, a housing enclosing at least the element and the aforementioned safety apparatus. Preferably the housing further encloses the safety apparatus or at least parts of the safety apparatus.

According to an embodiment of the invention, the unit is a Li-lon battery unit with at least one Li-Ion battery element, especially a Li-lon battery cell.

The battery element/battery cell may be formed as a so-called jelly roll or wounded type cell, respectively, or it may have a stacked arrangement, for example.

The present invention finally relates to a method for discharging an electric energy store element by use of a discharge device including two connections for connecting the electric energy store element and a circuit arrangement, which arrangement comprises a current path, which current path connects the two connections, comprises a switch element and has a well-defined electrical resistance R1 when connected through, wherein the circuit arrangement further comprises at least one further current path, which further current path also connects the two connections, comprises a switch element and has a well-defined electrical resistance R2 when connected through, wherein the current flow is controlled by use of the switch elements. In other words: The present invention finally relates to the use of the aforementioned discharge device to discharge an electric energy store element. Preferably the resistances R1, R2, ... of the different current paths differ from one to another.

According to an embodiment of the invention different current paths are interposed between the two connection points for at least two phases P1, P2 of the characteristic function f of the current flow versus the time during discharge of the electric energy store element under constant load with a low resistivity.

With regard to further technical features and advantages of the discharge device, safety apparatus, battery unit and method for discharging an electric energy store element as described above, it is referred to the description of the figures and the description of the figures.

### Figures

Further advantages and embodiments of the subject-matters as described herein are described in the figures and the following description of the figures, wherein the features described may be part of the invention alone or in any combination, insofar it is not excluded due to the description or the context. It has to be noted that the figures are of illustrative purpose, only, and are not meant to restrict the present subject-matters.
- Fig. 1: shows a schematic view of an electric energy store element and a discharge device according to an embodiment of the invention; and
- Fig. 2: shows the typical function of the current flow during the discharge of a Li-ion battery element;
- Fig. 3: shows diagrams with switching states of switch elements in the discharge device shown in Fig 1;
- Fig. 4: shows an electric energy store unit according to a first embodiment of the invention; and
- Fig. 5: shows an electric energy store unit according to a second embodiment of the invention.

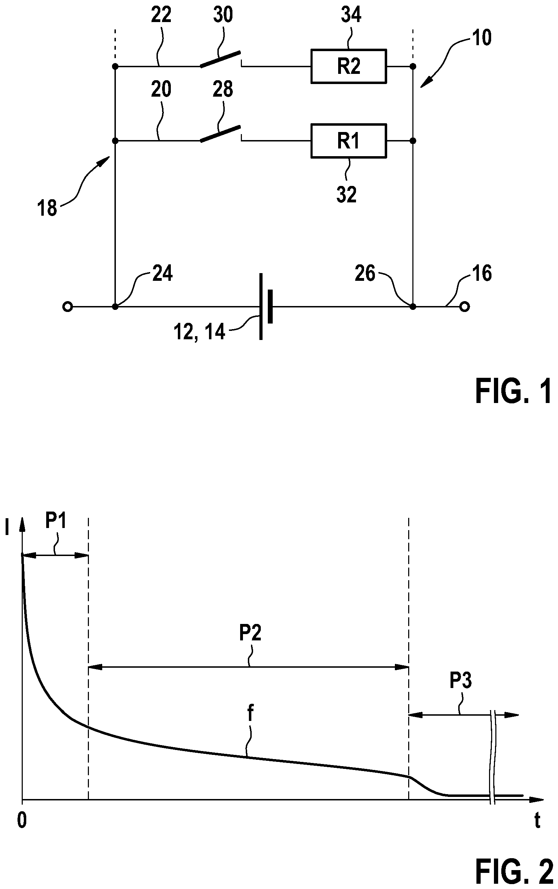

According to figure 1, a schematic structure of a discharge device 10 to discharge an electric energy store element 12 and the corresponding electric energy store element 12 is shown. The electric energy store element 12 is a battery element, more precisely a battery cell 14 of a Li-ion battery (Li-ion battery cell) interconnected in a series connection 16 of elements/cells of the battery.

The discharge device 10 comprises a circuit arrangement 18, which circuit arrangement 18 includes at least two current paths 20, 22 connected in parallel. The discharge device 10 further comprises two connections 24, 26 for connecting the electric energy store element 12. Each current path 20, 22 connects the connections 24, 26 and each path 20, 22 comprises a serial connection of a switch element 28, 30 and a resistor 32, 34 with resistances R1, R2. The one current path 20 comprises the serial connection of the switch element 28 and the resistor 32, and the further current path 22 comprises the serial connection of the switch element 30 and the resistor 34. The circuit arrangement 18 shown in Fig. 1 is an equivalent circuit only. The components 32, 34 can be any kind of electrical components 32, 34 of a well-defined resistance R1, R2, each resistance R1, R2 defining the resistances of the corresponding current path 20, 22 when connected through by the corresponding switch element 28, 30. In the shown example, the resistances R1, R2 of the different resistors 32, 34 (and similarly the resistances of the different current paths 20, 22) differ from one to another. As indicated by the dotted lines, the circuit arrangement 18 of the discharge device 10 can comprise more than two current paths 20, 22.

The discharge device 10 with the circuit arrangement 18 comprising two switchable current paths 20, 22 opens the opportunity to change the discharge-resistance during the discharge process of a rapid discharge.

Fig. 2 shows the typical function f(t) = I of the current flow I during the discharge of a Li-ion element (cell) via a constant (low) external load. The discharge process starts with a short first phase P1 of very high current flow, which then turns into a longer lasting second phase P2 of medium /low current flow. This second phase P2 lasts until a complete discharge of the cell or until the closing of the separator (so-called "shut-down" effect) - marked as third phase P3.

The at least two switch elements of Fig. 1 preferably have different current carrying capacities in the closed state. At least one switch element (e.g. the switch element 28 of the current path 20) switches very quickly and should allow a very high current flow I through the corresponding current path 20 during the first phase P1. The second switch element (e.g. the switch element 28 of the further current path 22) may have a lower current-carrying capacity, but ensures the characteristic current flow I during the second phase P2 through the corresponding current path 22 of this second switching element alone or through a parallel connection of said current path 22 together with the current path 20 including the first switching element 28. The second switching element 28 (of the further current path 22) may be characterized by a longer on-time.

By use of the discharge device 10 shown in Fig. 1, current peaks of the flow I can be reduced without limiting the overall discharge time.

In a realistic execution example the element/cell capacity is about 30 - 60 Ah and the element/cell internal is about resistance 0.5 - 3 mohms. The resistance of the switching element 28 including supply lines of the current path 20 is about 0.1 to 1 mohm, the resistance of the second switching element 30 including supply lines of the current path 30 connected in parallel is about 1 to 10 mohms. The current path 20 with switching element 28 is design for a very short very high discharge: t <1s, C-rate for discharge current I ∼ 10 - 100 C and the current path 22 with switching element 30 is design for short-term average discharge: t about ∼ 30s, C-rate for discharge current 1 C to 20 C.

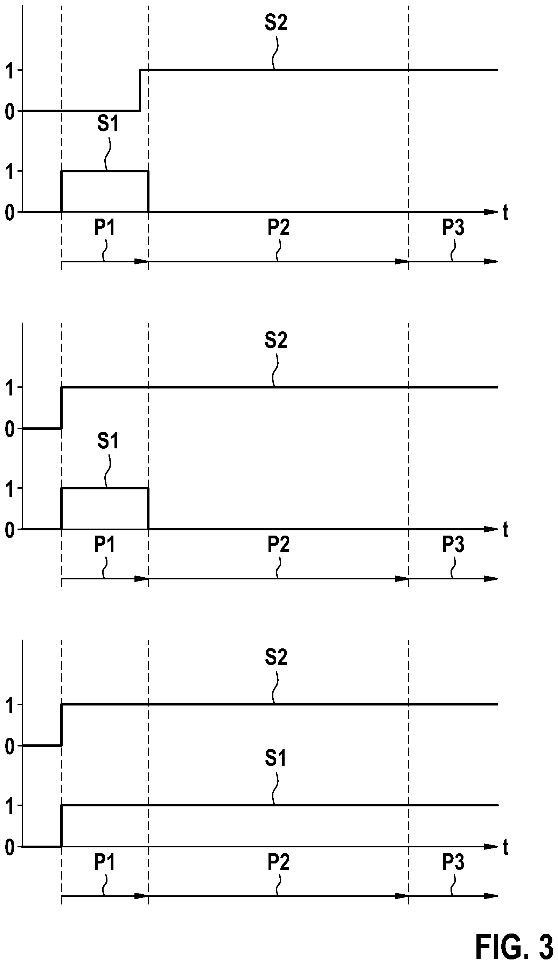

Fig. 3 shows corresponding diagrams with switching states (0 = off; 1 = on) of the switch elements 28, 30 in the different phases P1 - P3. The upper part shows a diagram of a switching scheme, wherein each current path 20, 22 is assigned to a corresponding phase P1, P2. In the first phase P1 switch element 28 is switched on, wherein switch element 30 is switched off. In the second phase P2 and the third phase P3 switch element 30 is switched on, wherein switch element 28 is switched off.

The middle part shows a diagram of a switching scheme, wherein both switch elements 28, 30 are switched on in the first phase P1. During the second phase P2 and the third phase P3 switch element 28 is switched off, wherein switch element 30 is still switched on.

The lower part shows a diagram of a switching scheme simulating discharge device 10 having only one current path. Both switch elements 28, 30 are switched on during all three phases P1 - P3. In this switching scheme the current paths 20, 22 are used redundantly, e.g. for safety reasons.

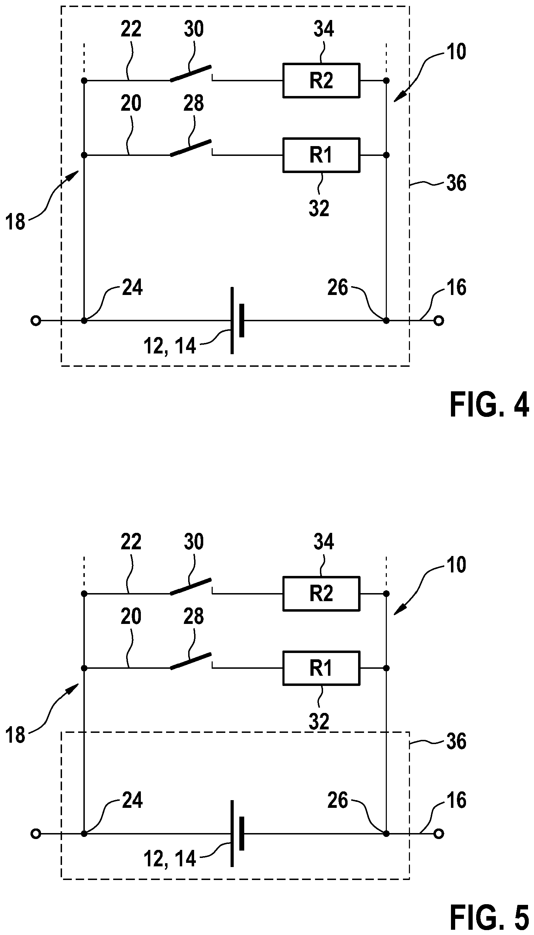

Fig. 4 shows a schematic representation of an embodiment of an electric energy store unit comprising an electric energy store element 12 (a battery element 14, to be more precisely), the discharge device 10 and a housing 36 enclosing the electric energy store element 12 and the discharge device 10.

Fig. 5 shows a schematic representation of another embodiment of the electric energy store unit comprising an electric energy store element 12 (a battery element 14, to be more precisely), the discharge device 10 and a housing 36, which housing is enclosing the electric energy store element 12 only. The discharge device 10 /safety apparatus is located outside the housing 36.

## Claims

1. A discharge device (10) to discharge an electric energy store element (12), especially a battery element, the discharge device (10) including two connections (24, 26) for connecting the electric energy store element (12) and a circuit arrangement (18), which arrangement (18) comprises a current path (20), which current path (20) connects the two connections (24, 26), comprises a switch element (28) and has a well-defined electrical resistance R1 when connected through,
wherein the circuit arrangement (18) further comprises at least one further current path (22), which further current path (22) also connects the two connections (24, 26), comprises a switch element (28) and has a well-defined electrical resistance R2 when connected through.

2. The discharge device according to claim 1, **characterized in that** the resistance R1, R2 of the electrical components (32, 34) are adapted to different phases P1, P2 of a characteristic function f of the current flow versus the time of the electric energy store element (12) under constant load of low resistivity.

3. The discharge device according to claim 1 or 2, **characterized by** at least one control device for controlling the switch elements (28, 30), wherein the control device is arranged for controlling the current flow depending on the characteristic function f of the electric energy store element (12) by use of the switch elements (28, 30).

4. The discharge device according to claim 3, **characterized in that** the control device interposes the different current paths (20, 22) between the two connections (24, 26) for at least two of the phases P1, P2 of the characteristic function f.

5. The discharge device according to one of claims 1 to 4, **characterized in that** one of the switch elements (28; 30) has a higher switching speed and/or a higher current-carrying capacity than the other switch element (30; 28) or at least one of the other switch elements.

6. A safety apparatus, comprising: a discharge device (10) to discharge an electric energy store element (12) in response to a deformation of an energy store element (12), that is impending or that has occurred, **characterized in that** the discharge device (10) is a discharge device (10) according to one of claims 1 to 5.

7. An electric energy store unit comprising an electric energy store element (12), especially a battery element (14), a housing (36) enclosing at least the element (14) and the safety apparatus according to claim 6.

8. The electric energy store unit according to claim 7, **characterized in that** the unit is a Li-Ion battery unit with at least one Li-Ion battery element (12).

9. A method for discharging an electric energy store element (12), especially a battery element, by use of a discharge device (10) including two connections (24, 26) for connecting the electric energy store element (12) and a circuit arrangement (18), which arrangement (18) comprises a current path (20), which current path (20) connects the two connections (24, 26), comprises a switch element (28) and has a well-defined electrical resistance R1 when connected through, wherein the circuit arrangement (18) further comprises at least one further current path (22), which further current path (22) also connects the two connections (24, 26), comprises a switch element (28) and has a well-defined electrical resistance R2 when connected through, wherein the current flow is controlled by use of the switch elements (28, 30).

10. The method according to claim 9, **characterized in that** different current paths (20, 22) are interposed between the two connection points (24, 26) for at least two phases P1, P2 of the characteristic function f of the current flow versus the time of the electric energy store element (12) under constant load of low resistivity.
